Europäisches Patentamt

European Patent Office

Office européen des brevets

(11) Publication number: **0 179 537**
**B1**

## EUROPEAN PATENT SPECIFICATION

(45) Date of publication of patent specification: **21.09.88**

(21) Application number: **85201726.8**

(22) Date of filing: **21.10.85**

(51) Int. Cl.⁴: **B 65 G 47/24,** B 65 G 13/04,
B 65 G 43/08

(54) Device for bringing crates or the like in a desired position.

(30) Priority: **22.10.84 NL 8403208**

(43) Date of publication of application:
**30.04.86 Bulletin 86/18**

(45) Publication of the grant of the patent:
**21.09.88 Bulletin 88/38**

(84) Designated Contracting States:
**BE DE FR GB NL**

(56) References cited:
**DE-B-1 028 495**
**DE-B-1 136 272**

(73) Proprietor: **Speciaal-Machinefabriek J.H. van
Uitert B.V.
Industriestraat 14-16
NL-5107 NC Dongen (NL)**

(72) Inventor: **van Uitert, Johannes Hendrikus
Vaartweg 33
NL-5109 RB 's-Gravenmoer (NL)**

(74) Representative: **Lips, Hendrik Jan George, Ir.
et al
HAAGSCH OCTROOIBUREAU Breitnerlaan 146
NL-2596 HG Den Haag (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a device for bringing crates, boxes or similar objects, moving along a transport track, in a desired position, said device comprising an intermediate track positioned between a supply track and a discharge track, said intermediate track comprising conveying surfaces lying at both sides of the longitudinal axis of said track, the speeds of said conveying surfaces being adjustable for moving one side of a crate faster than the other side so that the crate is turned around a vertical axis, sets of sensing means being present for determining the position of a crate and for adjusting said speeds.

Such a device is known by DE-B-1,028,495. In case of this known device two side-by-side positioned conveyor belts are used onto which a crate is brought by the supply track. Because the bottom of the crate is coming into contact with the conveying belt over a rather large surface relatively high frictional forces will arise during turning a crate to its desired position.

Furthermore the two sensors of the first set of sensing means are positioned above said intermediate conveyors so that only when a crate is already present on a conveyor the position of the crate is determined and the speeds of the two conveyors only then can be adjusted to bring a crate in the desired position. When, to obtain this position, a part of the crate has to be accelerated it is a draw back that this part is still present on the supply track so that it will be necessary to decelerate the foremost portion of the crate which is already present at the one sensor.

In view of this, generally speaking, it will be necessary to mount a number of sets of sensing means one after the other, as this is described in said publication.

Now the invention aims to remove the disadvantages and to this end the device according to the invention is characterized in that said intermediate track is formed by two sets of separately driven rollers, the rollers of one set alternating the rollers of the other set and the rollers of one set at the upper side lying in a common plane, the tangential planes of both sets being inclined with respect to the horizontal plane so that the rollers form a conveying track with a slightly V-shaped cross-section, a first set of sensing means being provided at the end of the supply track for determining the position of a crate before this is fed to the intermediate track and for adjusting the speeds of the two sets of rollers, a second set of sensing means being present for determining when a crate has obtained its desired position and the speeds of the two sets of rollers can be equalized, said second set of sensing means being positioned at either side of the longitudinal axis of said intermediate track for measuring the distance between each of said sensing means and the conveyed crate.

By using an intermediate track formed by two sets of rollers such that a slightly V-shaped cross-section is obtained, a crate is only coming into contact with said rollers along an edge of it so that no large friction forces are caused when turning a crate.

By positioning the first set of sensing means at the end of the supply track there is sufficient time to determine at which speed the rollers of each set will have to be brought to bring the crate in the right position. By said second set of sensing means it is exactly determined when the crate has come into the right position so that then the speeds of the sets of rollers can be equalized.

It can be remarked, that from DE-A-1,136,272 it is known to use two sets of rollers with conical surfaces so that a slightly V-shaped cross-section of an intermediate track is obtained. In case of this publication it is, however, not indicated in which way the speed of the rollers is adjusted to bring a crate, present on said intermediate track, in the right position.

According to a further elaboration of the present invention it can be provided that the signals delivered by said sensing means observing the position of a crate are processed in a control unit formed by a PLC (programmable logic chip) or a microprocessor for controlling the speed or the direction of rotation of both sets of rollers until the crate has acquired its desired position.

The invention will hereinbelow be further elucidated by means of a drawing; herein shows:

Fig. 1 a schematic top view of a device according to the invention; and

Fig. 2A and B schematic cross-sections along the line II-II of Fig. 1 of two different embodiments of this device.

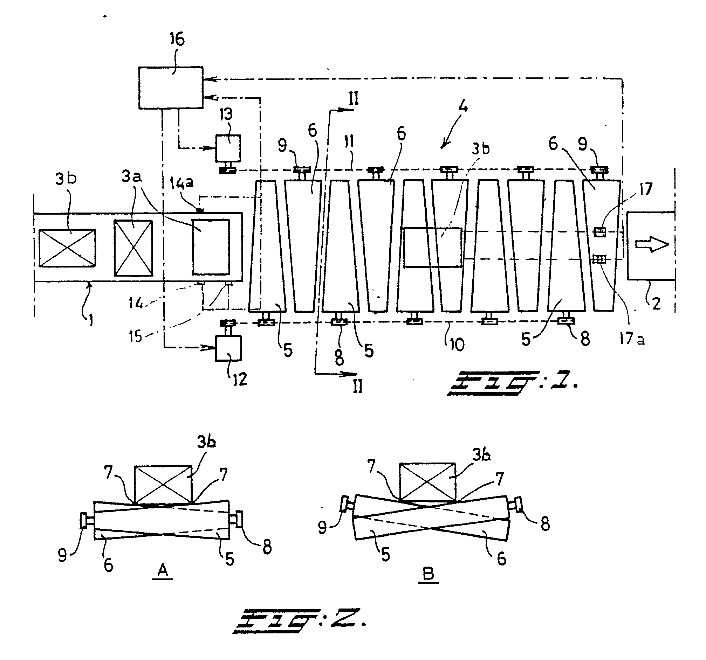

The device shown in Fig. 1 comprises a supply track 1 and a discharge track 2 for crates or the like, which are supplied in essence in two different positions 3a and 3b over the track 1, and all have to be discharged in the position 3b over the discharge track 2. The tracks 1 and 2 are for example roller tracks, of which the rollers can be driven, or are inclined with such a downward slope, that the crates are driven to the discharge track 2. Of course these tracks may also comprise transport chains, while the tracks 1 and 2 also may have a different construction.

Between these tracks 1 and 2 an intermediate track 4 is positioned, which establishes the actual device according to the invention. This intermediate track consists of alternating rollers 5 and 6 of a first and second set respectively. Figs. 2A and 2B show two embodiments of these rollers. In case of Fig. 2A the rollers 5 and 6 are conical, and in case of Fig. 2B cylindrical, but in both cases the rollers of a set at the upper side are lying in a common plane, enclosing an angle with the upper plane of the tracks 1 and 2, these planes mutually intersecting each other in about the axial plane of the tracks 1 and 2. With this the inclination of these tangential planes is such that, as appears from Fig. 2, a crate 3 will come into contact with one or more of the rollers 5 and 6 respectively only with the longitudinally extending bottom edges 7.

The rollers 5 and 6 each are provided with a sprocket-wheel 8 and 9 respectively, cooperating with a chain 10 or 11 respectively passing over tension wheels, not indicated and being driven by a related motor 12 and 13 respectively. Instead of a chain drive also another suitable common drive, of course, may be used, for example by means of sprocket-wheels positioned on the roller shafts, which are cooperating with intermediate pinions.

When the rollers 5 and 6 are driven with the same speed, a crate standing thereon, for example a crate 3a, will be moved rectilinear. If a crate, such as 3b should be turned, the speed of one of the sets is modified, so that the faster rollers will drive the relevant edge of the crate faster than the other side and the crate will turn correspondingly. As soon as the position of the crate has become that of a crate 3a, the speeds are again equalized to move the crate in that position to the track 2.

The larger the difference in speed, the faster the crate will be turned. In particular the direction of rotation of one set of rollers can be reversed, which provides the fastest action. With a fast rotation the length of the intermediate track 4 may be diminished accordingly.

An advantage of this way of turning is, that it does not require special parts and that a smooth transition from the rectilinear movement to the turning movement and vice versa is obtained. If required the speed of the rectilinear movement can be adjusted to the supply without hampering the turning movement.

Bringing in the desired position can be done in particular automatically. To that end a sensor assembly 14, 14a, can be provided above the level of the supply track 1 and preferably at both sides of this track. Said sensor assembly can be provided with photo-electric sensors with which the position of the rectangular bottom surface of a crate can be determined. The latter follows from distance measurement from the sensors 14 and 14a till the wall of the crate. When the sensors 14, 14a have observed a crate which is not in the desired position the crate is moved further and when the leading edge of the crate has reached a given point this is observed by the sensor beam of an arrival-detector 15 positioned along the track and only then a signal is given to the control device 16. This device 16 only sends a signal to the motors 12 and 13 when the rear edge of the crate has left the sensor beam of the detector 15.

By the signal of the device 16 the motors 12 and 13 are then set at different driving speeds for such a time until the crate has turned into the proper position, whereafter the normal drive is resumed.

By means of two positioning controllers 17 and 17a it can be observed whether the crate has exactly reached its proper position. When these controllers 17 and 17a are measuring the same distance up to the crate the motors 12 and 13 are reset to their normal equal driving speed.

The advantage of the positioning controllers 17 and 17a is, however, that with this an unequivocal turning over the desired angle can be obtained, regardless the friction between the crate edges 7 and the rollers 5 and 6, so that also in the case of fatty or wet crates or rollers the desired turning can still be achieved.

These sensor assemblies further can be used to control the speeds of the rollers 5 and 6 and possibly of the supply track 1 and/or the discharge track 2 in such a manner that no undesired congestions occur in the track.

It will be obvious, that the crates may also be turned in such a way that all crates are discharged in position 3a.

This manner of turning of the crates causes hardly noise nuisance as the crates are not slowed down by stops or the like as is the case in known devices.

## Claims

1. Device for bringing crates (3a,b), boxes or similar objects, moving along a transport track, in a desired position, said device comprising an intermediate track (4) positioned between a supply track (1) and a discharge track (2), said intermediate track (4) comprising conveying surfaces (5, 6) lying at both sides of the longitudinal axis of said track (4), the speeds of said conveying surfaces (5, 6) being adjustable for moving one side of a crate (3a, 3b) faster than the other side so that the crate is turned around a vertical axis, sets of sensing means being present for determining the position of a crate and for adjusting said speeds, characterized in that said intermediate track (4) is formed by two sets of separately driven rollers (5, 6), the rollers of one set (5) alternating the rollers (6) of the other set and the rollers of one set at the upper side lying in a common plane, the tangential planes of both sets being inclined with respect to the horizontal plane so that the rollers (5, 6) form a conveying track with a slightly V-shaped cross-section, a first set of sensing means (14, 14a) being provided at the end of the supply track (1) for determining the position of a crate (3a,b) before this is fed to the intermediate track (4) and for adjusting the speeds of the two sets of rollers (5, 6), a second set (17, 17a) of sensing means being present for determining when a crate has obtained its desired position and the speeds of the two sets of rollers (5, 6) can be equalized, said second set of sensing means (17, 17a) being positioned at either side of the longitudinal axis of said intermediate track (4) for measuring the distance between each of said sensing means (17, 17a) and the conveyed crate (3).

2. Device according to claim 1, characterized in that the signals delivered by said sensing means (14, 14a; 17, 17a) observing the position of a crate (3) are processed in a control unit formed by a PLC (programmable logic chip) or a microprocessor for controlling the speed or the direction of rotation of both sets of rollers (5, 6) until the crate has acquired its desired position.

## Patentansprüche

1. Vorrichtung zum Bringen von sich längs einer Förderbahn bewegenden Kisten (3a,b), Kästen od.dgl. in eine gewünschte Lage, welche Vorrichtung eine Zwischenbahn (4) umfasst, die zwischen einer Zufuhrbahn (1) und einer Abfuhrbahn (2) vorgesehen ist, welche Zwischenbahn (4) beiderseits der Längsachse der Bahn (4) liegende Förderflächen (5, 6) umfasst, wobei die Geschwindigkeiten dieser Förderflächen (5, 6) einstellbar sind um die eine Seite einer Kiste (3a,b) schneller als die andere Seite zu bewegen, so dass die Kiste um eine vertikale Achse herum gedreht wird, wobei Sätze Fühler zum Bestimmen der Lage einer Kiste und zum Einstellen der genannten Geschwindigkeiten vorgesehen sind, dadurch gekennzeichnet, dass die genannte Zwischenbahn (4) von zwei Sätzen separat angetriebener Rollen (5, 6) gebildet wird, wobei die Rollen eines Satzes (5) abwechselnd mit den Rollen (6) des anderen Satzes angeordnet sind und die Rollen des einen Satzes bei der Oberseite in einer gemeinsamen Ebene liegen, während die tangentialen Flächen der beiden Sätze schräg zur horizontalen Ebene stehen, so dass die Rollen (5) eine Förderbahn mit einem einigermassen V-förmigen Querschnitt bilden, wobei ein erster Satz Fühler (14, 14a) beim Ende der Zufuhrbahn (1) zur Bestimmung der Lage einer Kiste (3a,b), ehe diese der Zwischenbahn (4) zugeführt wird, und zur Regelung der Geschwindigkeiten der zwei Sätze Rollen (5, 6) vorgesehen ist, wobei ein zweiter Satz (17, 17a) Fühler vorgesehen ist um zo bestimmen, wenn eine Kiste ihre erwünschte Lage erreicht hat und die Geschwindigkeiten der zwei Sätze Rollen (5, 6) einander gleichgemacht werden können, wobei der zweite Satz Fühler (17, 17a) beiderseits der Längsachse der Zwischenbahn (4) zum Messen des Abstands zwischen jedem der Fühler (17, 17a) und der geförderten Kiste (3) angeordnet ist.

2. Vorrichtung gemäss Anspruch 1, dadurch gekennzeichnet, dass die Signale, die durch die Fühler (14, 14a, 17, 17a) geliefert werden, welche die Lage einer Kiste (3) beobachten, in einer Regeleinheit verarbeitet werden, die durch einen PLC (programmierbaren logischen Chip) oder einen Mikroprozessor zur Regelung der Geschwindigkeit oder der Drehrichtung beider Sätze Rollen (5, 6) bis die Kiste ihre erwünschte Lage eingenommen hat, gebildet wird.

**Revendications**

1. Appareil conçu pour mettre des caisses (3a,b), boîtes ou objets similaires, se déplaçant le long d'une voie de transport, dans une position désirée, ledit appareil comprenant une voie intermédiaire (4) placée entre une voie d'amenée (1) et une voie de décharge (2), ladite voie intermédiaire (4) comprenant des surfaces transporteuses (5, 6) placées des deux côtés de l'axe longitudinal de ladite voie (4), les vitesses desdites surfaces transporteuses (5, 6) étant réglables pour déplacer un côté d'une caisse (3a, 3b) plus rapidement que l'autre côté de sorte que la caisse tourne autour d'un axe vertical, des jeux de moyens détecteurs étant présents pour déterminer la position d'une caisse et pour régler lesdites vitesses, caractérisé en ce que ladite voie intermédiaire (4) est formée de deux jeux de rouleaux menés séparément (5, 6), les rouleaux d'un jeu (5) alternant avec les rouleaux (6) de l'autre jeu et les rouleaux d'un jeu au niveau du côté supérieur se trouvant dans un plan commun, les plans tangentiels des deux jeux étant inclinés par rapport au plan horizontal de sorte que les rouleaux (5, 6) forment une voie de transport avec une coupe transversale sensiblement en V, un premier jeu de moyens détecteurs (14, 14a) étant placé à l'extrémité de la voie d'amenée (1) pour déterminer la position d'une boîte (3a,b) avant que celle-ci ne soit amenée à la voie intermédiaire (4) et pour régler les vitesses des deux jeux de rouleaux (5, 6), un seoond jeu (17, 17a) de moyens détecteurs étant présent pour déterminer quand une boîte a atteint sa position désirée et quand les vitesses des deux jeux de rouleaux (5, 6) peuvent être égalisées, ledit seoond jeu de moyens détecteurs (17, 17a) étant placé des deux côtés de l'axe longitudinal de ladite voie intermédiaire (4) pour mesurer la distance entre chacun desdits moyens détecteurs (17, 17a) et la caisse transportée (3).

2. Appareil selon la revendioation 1, caractérisé en ce que les signaux émis par lesdits moyens détecteurs (14, 14a; 17, 17a) observant la position d'une caisse (3) sont traités dans une unité de commande formée par une puce logique programmable ou un microprocesseur pour commander la vitesse ou le sens de rotation des deux jeux de rouleaux (5, 6) jusqu'à ce que la caisse ait acquis sa position désirée.

0 179 537

FIG.1.

FIG.2.